## Europäisches Patentamt

## European Patent Office

## Office européen des brevets

(19)

(11) Veröffentlichungsnummer: **0 197 448**
**B1**

(12) ## EUROPÄISCHE PATENTSCHRIFT

(45) Veröffentlichungstag der Patentschrift:
05.10.88

(51) Int. Cl.⁴: **B 65 G 1/04**, B 65 G 1/06

(21) Anmeldenummer: **86104230.7**

(22) Anmeldetag: **27.03.86**

(54) **Vorrichtung zum Gütertransport in einem Tiefstapelgestell, ein solches Gestell sowie ein Gestell zum Tragen der Vorrichtung ausserhalb des Tiefstapelgestells.**

(30) Priorität: **01.04.85 SE 8501598**

(43) Veröffentlichungstag der Anmeldung:
**15.10.86 Patentblatt 86/42**

(45) Bekanntmachung des Hinweises auf die Patenterteilung:
**05.10.88 Patentblatt 88/40**

(84) Benannte Vertragsstaaten:
**AT BE CH DE FR GB IT LI LU NL SE**

(56) Entgegenhaltungen:
**CH - A - 544 016**
**DE - A - 2 906 514**
**DE - A - 2 930 569**
**DE - A - 2 939 615**
**DE - B - 1 531 876**
**DE - B - 2 264 165**
**DE - U - 7 800 169**
**GB - A - 1 595 257**
**US - A - 3 800 963**
**US - A - 3 817 406**
**US - A - 3 973 685**

(73) Patentinhaber: **Eab Lagringssystem Aktiebolag,
Snöbollsvägen 19, S-564 00 Bankeryd (SE)**

(72) Erfinder: **Johansson, Kent, PL 2246, S-440 07 Sjövik (SE)**

(74) Vertreter: **Siebmanns, Hubertus, Götalands Patentbyra
AB Box 154, S-561 22 Huskvarna (SE)**

EP 0 197 448 B1

## Beschreibung

Vorliegende Erfindung betrifft eine wagenähnliche Vorrichtung zum Gütertransport und ein Gestell zum Zusammenwirken mit der Vorrichtung entsprechend der in der Einleitung von Anspruch 1 näher angegebenen Art.

Man verwendet Tiefstapelgestelle beispielsweise in Kühlräumen, wo das Volumen maximal auszunutzen ist. Das Gut ist gewöhnlich auf Paletten gelagert, die in einem solchen Gestell sowohl in der Höhe als auch in der Tiefe als auch gewöhnlich in der Breite angeordnet sind. Da das Gut von verschiedener Art ist, liegt in der Regel ein Bedarf vor, eine oder mehrere Paletten herauszuholen, die sich tiefer im Lager befinden. Eine solche Entnahme ging bisher meistens derart vor sich, dass ein Hubstapler in ein Gestell hineinfuhr und alle vorderen Paletten in sowohl Tiefenwie auch Höhenrichtung entfernte, um freien Zugang zu der oder den gewünschten Paletten zu schaffen. Eine solche Verfahrensweise ist natürlich sehr umständlich, zeitraubend und teuer und daher verwerflich.

Soweit Vorrichtungen bisher bekannt wurden, welche das Einfahren von Hubstaplen in ein Tiefstapelgestell vermeiden, sind diese allzu kompliziert und unpraktisch, um als eine zufriedenstellende Lösung des hier vorliegenden Problemes betrachtet werden zu können.

Als Beispiel einer solchen Vorrichtung ist der Gegenstand der DE-A-2 930 569 zu betrachten. Hierbei handelt es sich um einen batteriegetriebenen, steuerbaren Transportwagen, welcher mit berührungslosen Sensoren arbeitet. Während die generelle Konzeption dieses Wagens in der Zeit liegt, werden sehr wichtige Einzelheiten bei dieser vorbekannten Lösung offenbar übersehen. So dürfte es schwierig und zeitraubend sein, den Wagen in das gewünschte Schienenpaar einzuführen. Diese Funktion verdient grosse Beachtung, wenn man bedenkt, dass ein Wagen vorteilhaft einer Vielzahl von Schienenpaaren zugedacht ist und demnach häufig zu entnehmen und wiedereinzusetzen ist. Auch wird ein womöglich noch wichtigerer Umstand bei dieser vorbekannten Lösung offenbar überhaupt nicht beachtet, nämlich dass die Regale oder Gestelle in den meisten Fällen schwankende Innenmasse der jeweiligen Schienenpaare aufweisen. Sind diese vorhanden, so besteht die grosse Gefahr, dass der Wagen entweder festfährt oder aus dem Schienenpaar herausfällt. Aus wirtschaftlichen Gründen ist es kaum sinnvoll, vorzuschreiben, dass die Regale oder Gestelle übermässig stark dimensioniert bzw. verstrebt werden, um genannte Risiken mit Sicherheit auszuschliessen. Schliesslich sind bei diesen vorbekannten Wagen keine Sicherheitsvorkehrungen für den Transport auf einem Hubstapler getroffen und so birgt die ausschliesslich photoelektrische Steuerung Risiken für Betriebsstörungen in sich bzw. kompliziert die Konstruktion gegenüber einer wenigstens teilweise mechanischen Steuerungsweise.

Ziel vorliegender Erfindung ist daher die Schaffung einer technisch avancierten Vorrichtung, die flexibel in Funktion und Anwendung ist. Auch das Tiefstapelgestell soll relativ einfach und formstabil sein bei minimalem Materialverbrauch und soll einen Schnelltransport von Vorrichtung und Gut gestatten. Schliesslich sollen die Vorrichtung und mit dieser zusammenwirkende Teile unempfindlich, leicht hantierbar, von grosser Lebensdauer und preisgünstig sein.

Diese Aufgabe wird erfindungsgemäss dadurch verwirklicht, dass eine Vorrichtung der eingangs genannten Art wie im kennzeichnenden Teil von Anspruch 1 angegeben beschaffen ist.

Weitere Merkmale und Vorteile der Erfindung gehen aus folgender Beschreibung unter Hinweis auf beigefügte Zeichnungen hervor, welche einige bevorzugte, doch nicht begrenzende Ausführungsbeispiele zeigen. Im einzelnen zeigen:

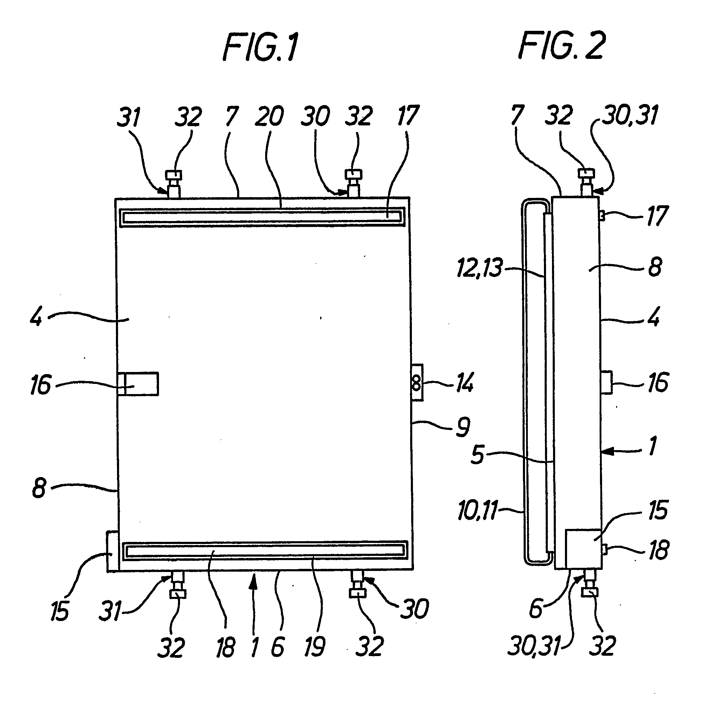

Fig. 1 eine erfindungsgemässe Vorrichtung zum Gütertransport in einem Tiefstapelgestell in Draufsicht,

Fig. 2 eine Seitenansicht von links in Fig. 1,

Fig. 3 eine Seitenansicht von unten in Fig. 1,

Fig. 4 eine Ansicht ähnlich Fig. 1, doch in vergrösserter Darstellung und ohne Deckel oder Oberseite,

Fig. 5 ein Tiefstapelgestell gemäss der Erfindung in Vorderansicht,

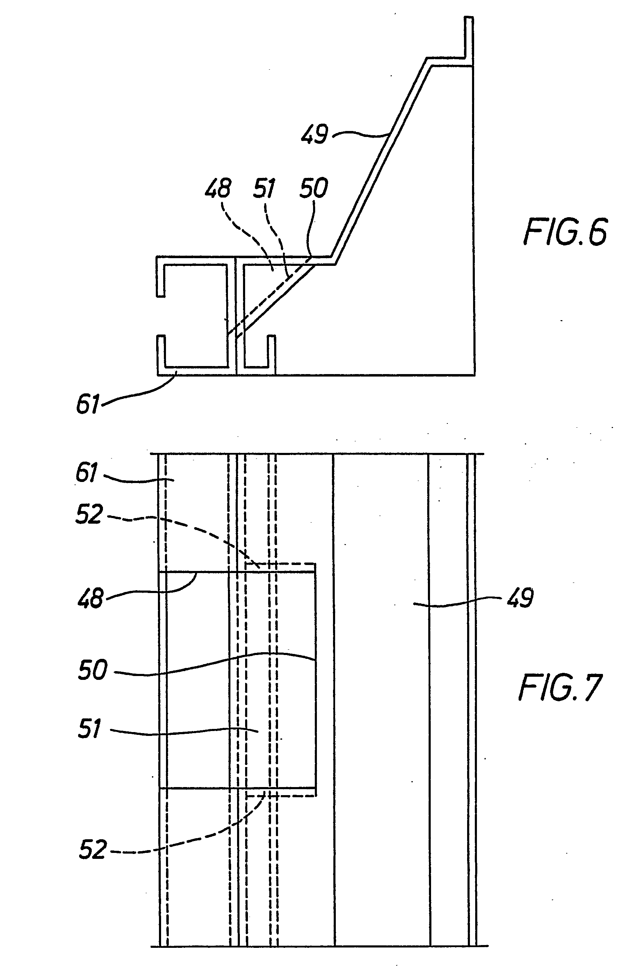

Fig. 6 eine Teilansicht einer Einzelheit aus Fig. 5 in vergrösserter Darstellung,

Fig. 7 eine Ansicht von oben in Fig. 6,

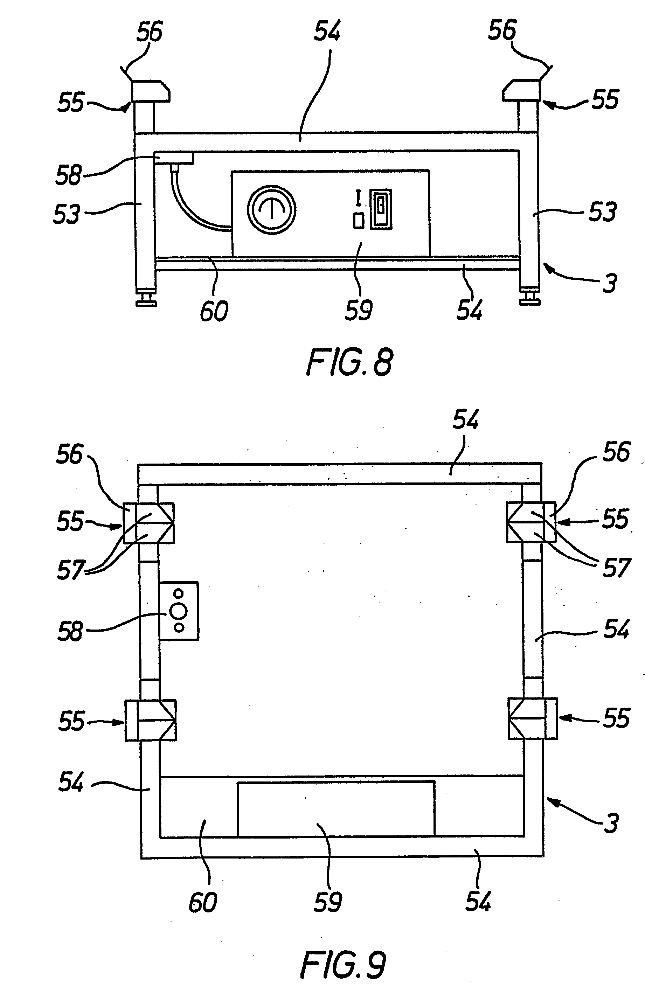

Fig. 8 eine Vorderansicht eines erfindungsgemässen Tragegestelles,

Fig. 9 eine Ansicht von oben in Fig. 8,

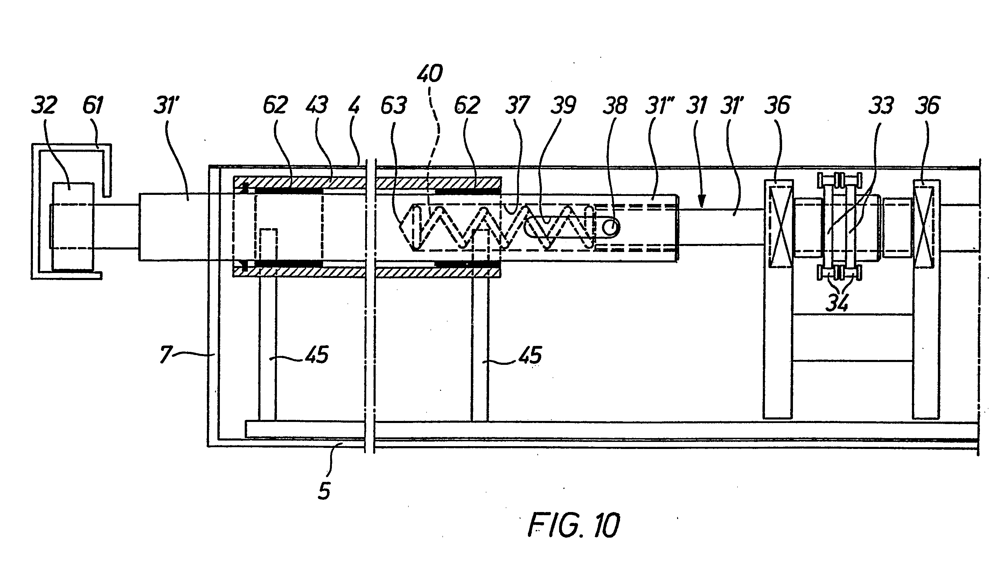

Fig. 10 ein Schnittbild gemäss Schnittlinie X-X in Fig. 4 und

Fig. 11-14 perspektivische Ansicht verschiedener Laufschienenausführungen mit anschliessendem Tragteil.

Die Erfindung betrifft somit drei Haupteinheiten, nämlich eine Vorrichtung 1 zum Gütertransport sowie ein Tiefstapelgestell 2 und ein Gestell 3 für diese Vorrichtung.

Die Vorrichtung 1 ist wagenähnlich und hat eine abnehmbare Oberseite 4, eine Unterseite 5, Seiten 6 und 7, eine Vorderseite 8 und eine Hinterseite 9. Von der Unterseite hängen zwei voneinander auf Abstand angeordnete querlaufende Bügel 10, 11 herunter, welche an jeweils einem Befestigungsorgan 12 bzw. 13 schwenkbar gelagert sind. Aufgabe dieser Bügel ist es, ein mögliches Abgleiten der Vorrichtung in seitlicher Richtung von einem Hubstapler zu vermeiden, wenn die Vorrichtung von den Hubstaplergabeln angehoben ist. Normalerweise nehmen die Bügel die in den Zeichnungsfiguren gezeigte abragende Lage ein, lassen sich jedoch zwecks Transport und Lagerung leicht in Anlage an die Unterseite 5 abschwenken. Ferner sollen die Bügel während des Gütertransportes der Vorrichtung um Güterteile herumschwenken, die in den Bereich unter die Vorrichtung einragen.

An der Rückseite ist vorzugsweise zentral ein Anzeigeorgan 14 angeordnet, z.B. eine Photozelle oder ein mechanischer Geber, der wenigstens in einem gewissen Arbeitsprogramm vor der Vorrichtung befindliche Güter oder Gegenstände abfühlt, z.B. eine Palette, und bei einem solchen Kontakt die Vorrichtung zum Stillstand bringt. Das Anzeigeorgan 14 ist vorzugsweise gerade nach oben gerichtet und bekommt Kontakt mit beispielsweise einer voranliegenden Palette, sobald das Organ unter diese einfährt.

An der Vorderseite 8 ist vorzugsweise auf der einen Seite ein vorderes Anzeigeorgan 15 angeordnet, z.B. eine Photozelle oder ein meachanischer Geber, welcher mit einer nahegelegenen Schiene 61 zum Tragen und Fortbewegen der Vorrichtung zusammenwirkt, indem er sich an der Schiene orientiert. Sobald diese Orientierung aufhört, in der Regel an der Vorderseite des Gestells, wo die Schiene endet, wird ein Impuls an die Vorrichtung gegeben, welche als dann anhält, vorzugsweise in einer gewissen bestimmten Lage, die ein Einsetzen und Ausheben der Vorrichtung sowie auch das Beladen mit und Entlasten von Gütern gestattet.

Auf der Oberseite 4 und vorzugsweise mittig im Anschluss an die Vorderseite ist ein oberes Anzeigeorgan 16 angeordnet, welches vorzugsweise als mechanisches Kipporgan ausgeführt ist, dessen der Vorrichtungsmitte zugewendetes Ende von einer Kippachse getragen ist, gleichzeitig wie dieses Ende etwa in der Ebene der Oberseite angeordnet ist. Das andere Ende ragt in einem spitzen Winkel nach oben und ist federbelastet. Ferner befinden sich an der Oberseite Hebebalken 17, 18, welche vorzugsweise parallel zu den Seiten 6, 7 und im nahen Anschluss an diese angeordnet sind. Diese Hebebalken sind in ihrer Ausgangslage in Öffnungen 19, 20 in der Oberseite versenkt. Das obere Anzeigeorgan hat mehrere Aufgaben. Wenn die Vorrichtung beispielsweise eine Palette holen soll, wird sie an diese heran- und unter diese gefahren, wobei das Anzeigeorgan 14 ausser Funktion ist, so dass die Vorrichtung beim ersten Kontakt mit der Palette nicht anhält, sondern unter diese einfährt, bis das Anzeigeorgan 16 die Palette erreicht und von dieser beispielsweise nach unten gedrückt wird. In dieser Lage werden die Balken 17, 18 angehoben, um ihrerseits die Palette mit Gut anzuheben, worauf die Vorrichtung in die beabsichtige Lage bewegt wird. Eine andere Aufgabe des Anzeigeorgans 16 ist es, eine Lagenrichtigstellung im Verhältnis zu geladenem Gut zu gestatten. Wurde beispielsweise eine Palette 46 von einem Hubstapler etwas falsch auf oder oberhalb der Vorrichtung abgesetzt, so dass das Anzeigeorgan 16 nicht von der Palette beeinflusst wird und als Folge hiervon die Hebebalken nicht in ihre Hebelage bewegt werden, so lässt sich die Vorrichtung unter die Palette einfahren, bis das genannte Anzeigeorgan beeinflusst wird, worauf ein Arbeitszyklus wie vorgenannt fortfahren kann.

Die Enden der Hebebalken sind vorzugsweise von jeweils einem hydraulischen Hebezylinder 21, 22, 23, 24 getragen. Diese Zylinder sind unter sich durch hydraulische Leitungen 25 verbunden, welche zu einem hydraulischen Aggregat 26 führen, das von einem Elektromotor 27 getrieben ist. Die Steuerung erfolgt bevorzugt über ein Programmwerk, ein sogenanntes PC-System oder dergleichen 28 mit Hilfe von an sich bekannter Fernsteuerausrüstung (nicht gezeigt). Da es schwierig oder geradezu unmöglich sein kann, die Vorrichtung mit Hilfe einer äusseren Kraftquelle anzutreiben, ist sie vorzugsweise von Batterien 29 angetrieben.

Die Vorrichtung wird die im Tiefstapelgestell und auf dem Gestell von zwei Achsen 30, 31 getragen, welche aus den Seiten 6 und 7 hinausragen, um an ihren freien Enden Laufräder 32 zu tragen, deren der Achse abgewendete Seite bevorzugt konvex ausgeführt ist, teils um leichter in genannte Schienen oder Laufbahnen eingeführt werden zu können, und teils um eine mögliche Reibung an diesen gering zu halten.

Die Achsen 30, 31 sind jeweils vorzugsweise in drei Teilen ausgeführt, nämlich einem zentralen Teil 30' bzw. 31', welcher mit Transmissionsrädern 33 versehen ist, vorzugsweise Kettenrädern, um welche Ketten oder dergleichen 34 geführt sind, welche von beiden Achsen zu einer vorzugsweise gemeinsamen Antriebsquelle 35 führen, vorzugsweise einem Elektromotor, der auch von den Batterien 29 gespeist wird. Die zentralen Achsenteile sind von Lagern 36 getragen, die sich an der Unterseite 5 abstützen.

Die Enden der zentralen Achsenteile sind in jeweils einen äusseren Achsenteil 30'' und 30''' bzw. 31'' und 31''' eingeführt, welche vorzugsweise als im wesentlichen massive Achsenteile ausgeführt sind, jedoch ausgebohrte innere Enden besitzen, in deren Bohrungen 37 die Enden der zentralen Achsenteile eingeführt und gegen Relativdrehen sowie Abziehen gesichert sind, indem in den letztgenannten Enden radiale Zapfen 38 verankert sind, die sich in wenigstens ein axiales Langloch 39 in dem anschliessenden äusseren Achsenteil hinein erstrecken. In genannte Bohrungen 37 ist ausserdem zwischen deren Boden- 63 und der betreffendeb Stirnseite des eingeschobenen Achsenteiles eine Druckfeder 40 eingesetzt, die bestrebt ist, den äusseren Achsenteil nach aussen zu schieben. Auf diese Weise lässt sich der Abstand zwischen den Laufrollen jeder Achse selbsttätig an verschiedene und auch veränderliche Abstände zwischen zusammenwirkenden Laufschienen oder dergleichen anpassen und wird garantiert, dass die Laufrollen stets maximal in die Laufschienen eingeschoben sind und nicht Gefahr laufen, diese zu verlassen.

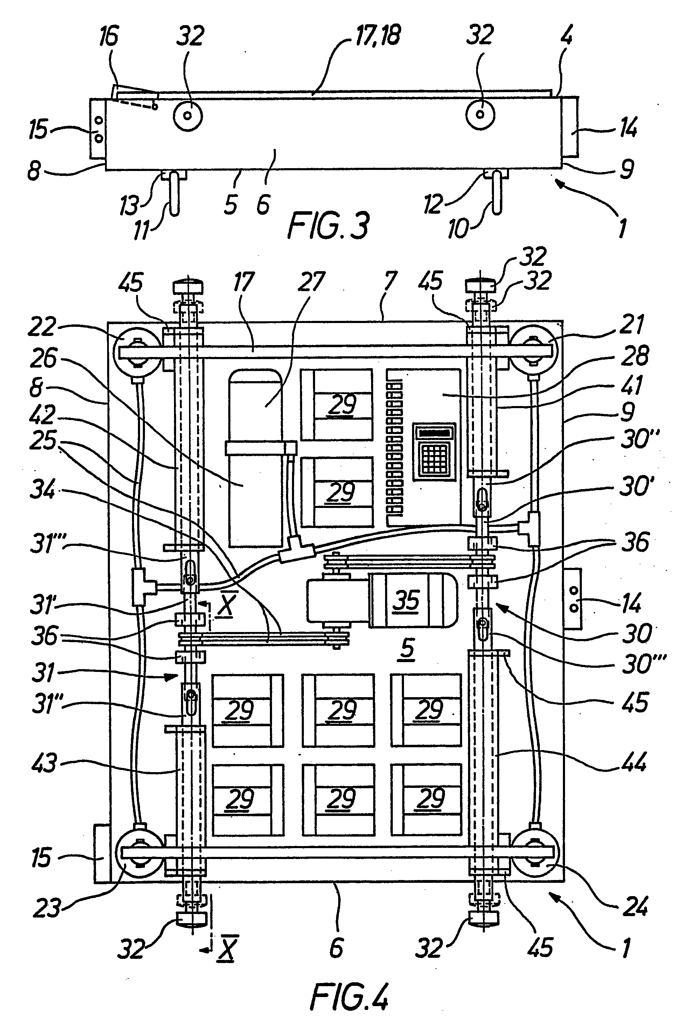

Die äusseren Achsenteile sind in jeweils einem Lagerzylinder 41, 42, 43, 44 mit innerem Lager, vorzugsweise einem Gleitlager 62 gelagert. Die Lagerzylinder sind ihrerseits von Lagerarmen 45 getragen, die sich an der Unterseite 5 abstützen. Diese Lagerzylinder und die Lagerarme tragen das gesamte Gewicht der Vorrichtung und der Last und sind daher stabil und ohne Spiel ausgeführt. Dagegen kann es vorteilhaft sein, die Enden der zentralen Achsenteile mit relativ grossem Spiel in genannte Bohrungen einzupassen, wodurch Schrägstellungen vermieden oder kompensiert werden. Wie aus Fig. 4 hervorgeht, sind die Zylinder 41-44 paarweise verschieden lang ausgeführt, was durch die zentrale Antriebsweise bedingt ist. Indem alle Zylinder relativ lang ausgeführt sind, kann die Vorrichtung grosse Belastungen aufnehmen ohne Gefahr von Festklemmen, Schrägstellen und einseitigem Abnutzen der Achsen.

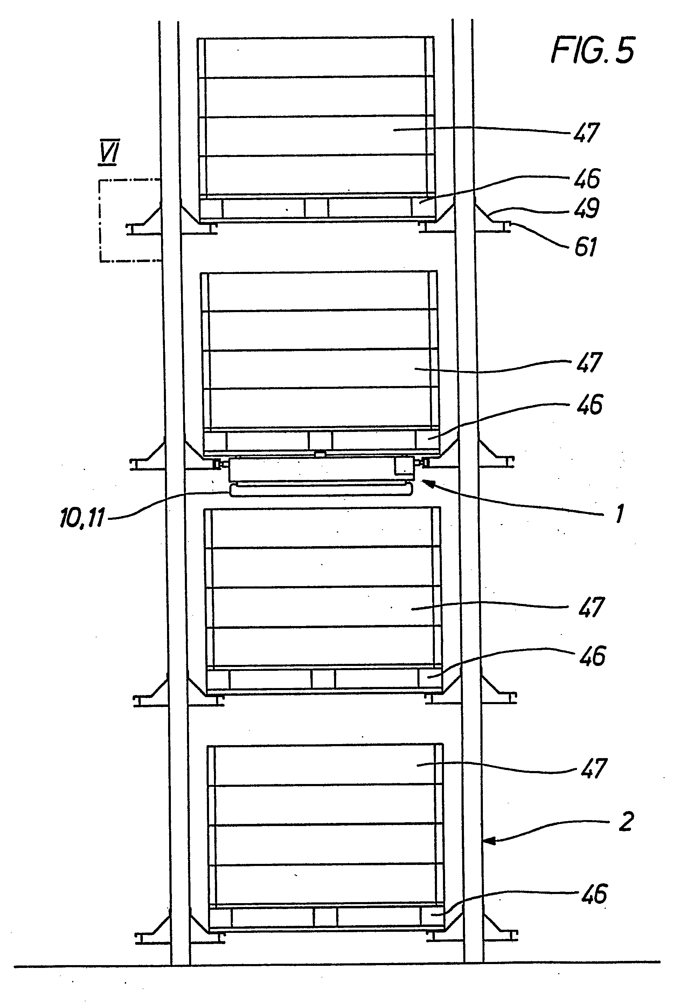

Aus Fig. 5 geht ein im Prinzip vorbekanntes Tiefstapelgestell 2 mit Paletten 46 und Gütern 47 hervor, welche normalerweise auf den Laufschienen 61 und angrenzenden, diese Schienen tragenden Tragprofilen 49 ruhen. Man braucht nur eine Vorrichtung zu haben, um verschiedene Ebenen und auch angrenzende Gestelle zu bedienen. Beim Bewegen der Vorrichtung zwischen diesen fährt man einen Hubstapler an die in einer ihrer vorderen Ausgangslagen befindliche Vorrichtung heran, wobei die Hubstaplergabeln in die Bügel 10, 11 eindringen. Darauf wird die Vorrichtung bevorzugt an- und aus den Laufschienen 61 herausgehoben, was dadurch ermöglicht wird, dass letztere im Bereich der Laufrollen in diesen Lagen mit Aussparungen 48 versehen sind, welche bei einer bevorzugten Ausführung nach aussen und ein Stück in die die Laufschienen tragenden Tragprofile hinein fortgesetzt sind. Von einer Aussparungskante 50, welche sich am weitesten in den Tragprofilen befindet, erstreckt sich ein Gleitblech 51 schräg nach unter und zurück in den mittleren oder unteren Teil der Laufbahn der Laufschienen hinein. Das Gleitblech ist durch vertikale seitliche Stirnbleche 52, welche die Hohlräume des Tragprofiles abdecken, mit sowohl dem Tragprofil als auch der Laufschiene durch Schweissen verbunden, wodurch sich eine stabile und homogene Konstruktion ergibt. Aufgabe des erweiterten Aussparungsteiles und des Gleitbleches ist eine Kompensation für mangelnde Exaktheit beim Hubstaplerfahren sowie beim Gestell. Des letztere kann beispielsweise durch grosse Belastung und/oder ungleiche solche in verschiedenen Bereichen beeinflusst werden. Dank diesen Kennzeichen in Kombination mit dem in der Regel etwas grösseren Innenabstand zwischen den Laufrollen eines Paares verglichen mit dem eines Schienenpaares ist es ohne Bedeutung, wenn bei Einsetzen der Vorrichtung die Laufrollen auf beiden Seiten etwas ausserhalb der betreffenden Laufschienen gelangen, da die Gleitbleche die Laufrollen automatisch in die Laufschienen einführen und damit die gesamte Vorrichtung genau an ihren vorgesehenen Platz bringen ohne Zeitverschwendung für Feineinpassen.

Wenn die erfindungsgemässe Vorrichtung nicht in einem Tiefstapelgestell angeordnet ist, wird sie gemäss einem weiteren erfindungsgemässen Kennzeichen auf einem Gestell 3 angeordnet, welches für sowohl Abgabe, Abholen und Aufladen von Batterien eingerichtet ist. Zu diesem Zwecke besteht das Gestell aus einer Rohrkonstruktion mit an vier Ecken angeordneten Beinen 53, die von horizontalen Streben 54 zusammengehalten sind. Von den oberen Streben ragen vier Auflagen 55 ab, die zur Aufnahme von jeweils einer Laufrolle vorgesehen sind, wobei auf mit den Gleitblechen 51 vergleichbare Weise eine Zwangsführung nach unten mit Hilfe von oberen, äusseren, nach unten und innen geneigten Führungsblechen 56 erzielt wird, welche zu unteren horizontalen V-förmigen Zentrierblechen 57 führen, auf welchen die Rollen schliesslich in einer für die gesamte Vorrichtung zwangsgesteuerten Endlage ruhen, in der die Vorrichtung mit Ladekontakten 58 selbsttätig in Berührung gebracht wird, welche für ein Aufladen der Batterien durch an sich bekannte Anschlüsse sorgen, die nicht näher gezeigt sind. An dem Gestell 3 ist nur an einer Seite ein mit Instrumenten versehenes Ladeaggregat 59 gezeigt, welches auf einer Konsole 60 ruht, die sich zwischen zwei gegenübergelegenen Streben erstrecken kann.

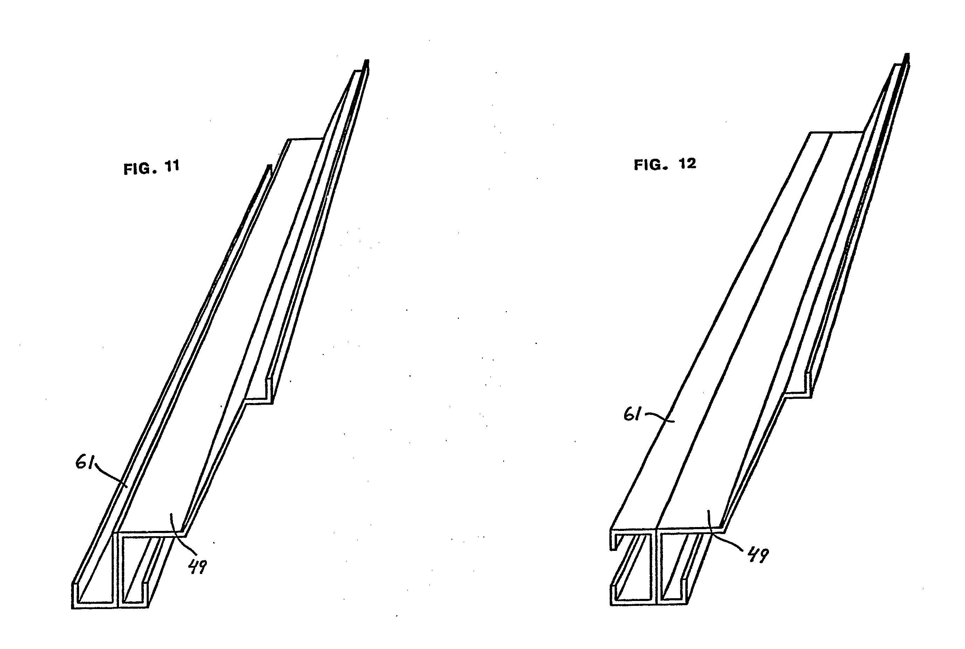

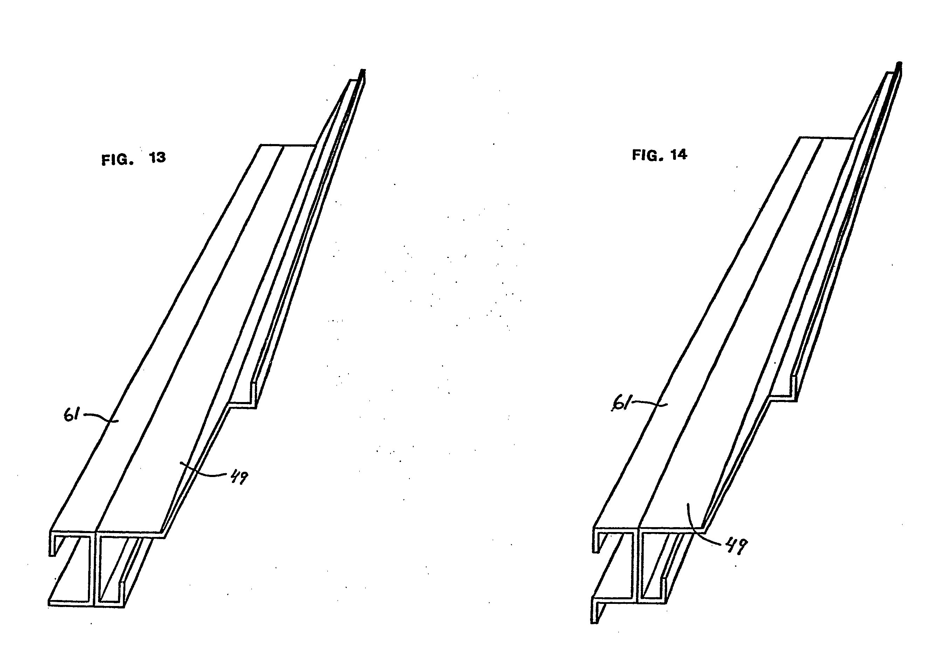

Die Erfindung ist nicht auf die gezeigten und beschriebenen Ausführungsformen begrenzt, sondern lässt sich im Rahmen des Erfindungsgedankens entsprechend den nachfolgenden Ansprüchen auf beliebige Weise abändern und ergänzen. So lassen sich an Stelle von hydraulischen Zylindern Schraubenwinden, Exzenter und dergleichen vorsehen. Natürlich können die verschiedenen Anzeigeorgane auch an anderen Stellen angeordnet oder teilweise ausgelassen werden. Die Schienen können auch andere Ausführungen erhalten als die in Fig. 11-14 angedeuteten. An Stelle von oder als Ergänzung zu den Hebebalken kann auch eine an sich bekannte scherenähnliche Hebe- und Senkvorrichtung in Frage kommen.

Die Bügel 10, 11 können ferner in die Vorrichtung 1 durch Elektromagnete oder eine mechanische Einrichtung einziehbar sein, welche mit einer an den Hebebalken 17, 18 befestigten Übersetzung versehen ist, so dass sie bei der ersten Hebebewegung eingezogen und darauf in dieser Lage gesperrt werden, zum Beispiel auf elektromechanische Art, bis die Vorrichtung 1 nach einem Arbeitszyklus in die Ausgangslage zurückgekehrt ist. Als Zusatz zu oder an Stelle von den Bügeln 10, 11 lässt sich die Unterseite der Vorrichtung mit beispielsweise einem Friktionsbelag aus Gummi versehen. Weitere Hilfe für den Hubstapler 4 lässt sich dadurch erzielen, dass die Anzeigeorgane, in erster Linie das Organ 15, mit beispielsweise einem Photozellenreflektor zusammenwirken, der strategisch oberhalb der Schiene angeordnet ist, so dass eine Signallampenanzeige dem Führer klarmacht, wenn die Räder 32 der Vorrichtung genau oberhalb der Aussparungen 48 in der Schiene 61 sich befinden. An Stelle von oder als Zusatz zu dem Anzeigeorgan 16 kann zum Beispiel eine Photozelle vorhanden sein.

**Patentansprüche**

1. Wagenähnliche Vorrichtung (1) zum Gütertrasnport und Gestell (2, 3) zum Zusammenwirken mit der Vorrichtung (1), welche Vorrichtung seitlich abragende, wenigstens teilweise angetriebene Achsen (30, 31) mit Laufrädern (32) aufweist, wobei letztere dazu vorgesehen sind, von Tragmitteln (55, bzw. 61) getragen zu werden und mit diesen zusammenzuwirken, und welche Vorrichtung ferner Hebe- und Tragorgane (17, 18) für das Gut, weitere Organe (14-16), um zu verhindern, dass die Vorrichtung unbeabsichtigt genanntes Gestell verlässt, sowie Organe zum Abfühlen von Gütern aufweist, wobei die Bewegungen der Hebe- und Tragorgane von einem Programmwerk oder dergleichen (28) steuerbar sind, und wobei eines (15) genannter Organe (14-16) aus einem Abfühlorgan besteht, vorzugsweise einer Photozelle zum Abfühlen genannter Tragmittel, welches Organ bei Aufhören des Abfühlkontaktes dazu vorgesehen ist, einen Impuls an genanntes Programmwerk oder dergleichen (28) zu geben, welches alsdann die Vorrichtung anhält, um deren Abheben oder Be- bzw. Entlasten von Gütern (46, 47) zu gestatten, dadurch gekennzeichnet, dass die durchgehenden Achsen (30, 31) geteilt und längenveränderlich sind und dass die Laufräder (32) und/oder die mit diesen zusammenwirkenden Tragmittel (55 bzw. 61) mit Organen (48, 51) bzw. (56, 57) zum Erleichtern des Ein- und Herausführens der Laufräder versehen sind.

2. Vorrichtung und Gestell nach Anspruch 1, dadurch gekennzeichnet, dass die Laufräder (32) von getriebenen, mehrteiligen Achsen (30, 31) getragen sind, wobei die äusseren Achsenteile (30″, 30‴) und (31″, 31‴) in axialer Richtung begrenzt beweglich sind und Mittel (40) besitzen, die danach streben, die Räder (32) in ihre äusserste Lage zu bewegen, dass die Achsenteile drehfest miteinander verbunden sind, und dass die Achsen vorzugsweise von einer gemeinsamen Antriebsquelle (35), insbesondere einem Elektromotor, getrieben sind.

3. Vorrichtung und Gestell nach Anspruch 1, dadurch gekennzeichnet, dass eines genannter Organe (14-16) ein an einer Stirnseite der Vorrichtung angeordnetes Anzeigeorgan (14) ist, nämlich ein mechanischer Geber, welcher vor der Vorrichtung (1) befindliche Gegenstände abfühlt, beispielsweise Lastpaletten (46), und welcher bei Abfühlkontakt zum Abgeben eines Signals an genanntes Programmwerk vorgesehen ist, und dass dieses Anzeigeorgan (14) vorzugsweise ausser Funktion setzbar ist, wenn die Vorrichtung (1) zum Einfahren unter eine Lastpalette (46) vorgesehen ist, beispielsweise zum Abtransport derselben.

4. Vorrichtung und Gestell nach wenigstens einem der Ansprüche 1-3, dadurch gekennzeichnet, dass eines genannter Organe (14-16) ein an der anderen Stirnseite der Vorrichtung angeordnetes Anzeigeorgan (16) ist, nämlich ein mechanisches, federbelastetes Kipporgan, welches an der Oberseite (4) der Vorrichtung im direkten Anschluss an genannte Stirnseite (8) angeordnet ist, welches Anzeigeorgan bei Einfahren der Vorrichtung unter beispielsweise eine Lastpalette (46) zum Abkippen und dabei zum Abgeben eines Signals vorgesehen ist, welches vorzugsweise die Vorrichtung zum Halten und die Hebe- und Tragorgane (17, 18) zum Ausfahren in ihre angehobene Lage und dabei zum Anheben genannter Lastpalette (46) vorgesehen ist.

5. Vorrichtung und Gestell nach wenigstens einem der Ansprüche 1 bis 4, dadurch gekennzeichnet, dass die Vorrichtung Sicherungsmittel besitzt, insbesondere einen Friktionsbelag und/oder Bügel (10, 11) zum Sichern der Vorrichtung auf insbesondere den Gabeln eines Hubstaplers.

6. Vorrichtung und Gestell nach wenigstens einem der Ansprüche 1 bis 5, dadurch gekennzeichnet, dass die Hebe- und Tragorgane (17, 18) Balken sind, deren Enden von jeweils einer unison getriebenen Hebevorrichtung getragen sind, vorzugsweise hydraulischen Hebezylindern (21-24), welche über hydraulische Leitungen (25) von einem Hydraulaggregat (26) mit einem Elektromotor (27) getrieben sind.

7. Vorrichtung und Gestell nach wenigstens einem der Ansprüche 1 bis 6, wobei genannte Tragmittel die Schienen (61) eines Tiefstapelgestells (2) sind, welche Schienen dazu vorgesehen sind, mit ihrer Oberseite insbesondere Lastpaletten (46) mit Gütern (47) zu tragen, dadurch gekennzeichnet, dass die Schienen (61) bzw. angrenzende Tragprofile (49) an wenigstens einer Stelle nach oben offene Aussparungen (48) aufweisen, durch welche die Laufräder (32) ein- bzw. ausführbar sind.

8. Vorrichtung und Gestell nach Anspruch 7, dadurch gekennzeichnet, dass die Aussparungen (48) von Gleitblechen (51) begrenzt sind, welche sich von einem oberen Bereich ausserhalb der Laufschienen (61) schräg nach unten in die Laufschienen hinein erstrecken und vorzugsweise von Querblechen (52) begrenzt sind.

9. Vorrichtung und Gestell nach wenigstens einem der Ansprüche 1 bis 8, gekennzeichnet durch ein Gestell (3) zum Tragen der Vorrichtung (1) ausserhalb eines Tiefstapelgestells (2) mit Tragmitteln (55) für die Laufräder (32) der Vorrichtung, wobei genannte Tragmittel (55) obere und äussere, nach unten und innen geneigte Führungsbleche (56) aufweisen, welche zu unteren, etwa horizontalen und V-förmigen Zentrierblechen (57) führen, auf welchen die Laufräder beim Abstellen der Vorrichtung einschliesslich landen in einer die gesamte Vorrichtung zwangssteuernden Endlage, in welcher die Vorrichtung mit Ladekontakten (58) zum Aufladen von Batterien (29) der Vorrichtung automatisch in elektrischen Kontakt gebracht wird.

10. Vorrichtung und Gestell nach wenigstens einem der Ansprüche 1-9, dadurch gekennzeichnet, dass die Laufräder an ihrer äusseren Stirnseite erhaben, insbesondere konvex ausgeführt sind.

**Claims**

1. A carriage-like arrangement (1) for the transportation of goods, and a frame structure (2, 3) for co-action with the arrangement (1), said arrangement having provided thereon laterally projecting, at least partially driven axles (30, 31) with support wheels (32), the latter being carried by carrier means (55 and 61) and co-act therewith and which arrangement also includes goods lifting and carrying devices (17, 18), and further devices (14-16) for preventing the arrangement from unintentionally leaving the frame structure, and further including goods detecting means, the movement of the goods lifting and carrying devices being controlled by a program mechanism or the like (28), and in which arrangement one (15) of said devices (14-16) comprises a detector, preferably a photo-cell operative in sensing or detecting said carrier means, said device upon termination of detecting contact being intended to send a signal to said program mechanism which thereafter stops the arrangement so as to permit said arrangement to be lifted, or to be loaded with goods or unloaded, characterized in that the throughpassing axles (30, 31) are divided and adjustable longitudinally or axially; and that the carrier wheels (32) and/or the carrier means (55 and 61) co-acting therewith are provided with means (48, 51) and (56, 57) respectively for facilitating assembly and removal of the carrier wheels.

2. An arrangement and frame according to claim 1, characterized in that the carrier wheels (32) are carried by multi-part driven axles (30, 31); in that the outermost axle parts (30″, 30‴) and (31″, 31‴) are arranged for limited movement in their axial directions and have means (40) which strive to move the wheels (32) in their outermost position; in that the axle parts are non-rotatably connected to one another; and in that the axles are preferably driven by a common drive source (35), suitably by an electric motor.

3. An arrangement and frame according to claim 1, characterized in that one of said devices (14-16) is an indicating device (14), namely a mechanical transducer, which is located on the front of the arrangement and which detects the presence of objects in front of the carriage-like arrangement (1), e.g. loading pallets (46) and which, when detecting contact is made, is intended to send a signal to the program mechanism; and in that said indicating device (14) can preferably be placed out of function when the arrangement (1) is positioned to pass beneath a loading pallet (46), e.g. for lifting the same.

4. An arrangement and frame according to at least one of claims 1-3, characterized in that one of said devices (14-16) is an indicating device (16), namely a mechanical, spring-biassed tilting device, which is mounted on the other front side of the arrangement and which at the upper side (4) of the arrangement is in direct connection with said front side (8), and which indicating device, when the arrangement is inserted beneath, e.g., a loading pallet (46) for tilting purposes is intended to produce a signal which is effective in causing the arrangement to stop and the lifting and carrying devices (17, 18) to be moved to a raised position, therewith lifting the loading pallet (46).

5. An arrangement and frame according to at least one of claims 1-4, characterized in that the arrangement is provided with safety means, particularly a friction coating and/or stirrups (10, 11) for securing the arrangement on the forks of a fork-lift truck in particulatr.

6. An arrangement and frame according to at least one of claims 1-5, characterized in that the lifting and carrying devices (17, 18) have the form of beams, the ends of which are carried by drive means, preferably hydraulic piston-cylinder devices (21, 24) which are driven in unison by a hydraulic unit (26) with an electric motor (27) via hydraulic pipes (25).

7. An arrangement and frame according to at least one of claims 1-6, in which said carrier means are the rails of a pallet rack (2), the upper surfaces of said rails being intended to support in particular pallets (46) with goods (47), characterized in that the rails (61) and adjacent carrier profiles (49) at at least one location present upwardly open cut-outs (48) through which the carrier wheels can be moved in and out.

8. An arrangement and frame according to claim 7, characterized in that the cut-outs (48) are delimited by small guide plates (51) which extend from an upper region externally of the rails (61) obliquely downwards into the rails and which are preferably delimited by small transverse plates (52).

9. An arrangement and frame according to at least one of claims 1-8, characterized by a stand (3) for supporting the arrangement (1) externally of a pallet rack (2) having carrier means (55) for the carrier wheels (32) of the arrangement, said carrier means (55) presenting upper and outer, downwardly and inwardly inclined guide plates (56) which extend to lower, generally horizontal and V-shaped centering plates (57) on which the carrier wheels land in a terminal position when the arrangement is deposited, this terminal position being guiding for the arrangement as a whole and in which terminal position the arrangement is brought automatically into electrical charging contacts (58) for charging batteries (29) intended for powering the arrangement.

10. An arrangement and frame according to at least one of claims 1-9, characterized in that the carrier wheels at the outer front side are of an elevated, preferably convex configuration.

**Revendications**

1. Dispositif analogue à un chariot (1) pour le transport de marchandises et bâti (2, 3) destiné à coopérer avec le dispositif (1), lequel dispositif présente des axes (30, 31) dépassant latéralement, au moins en partie entraînés et pourvus de roues porteuses (32) qui sont prévues pour être portées par des moyens de support (55 respectivement 61) et pour coopérer avec ceux-ci, lequel dispositif présente en outre des organes de levage et de support (17, 18) pour les marchandises, d'autres organes (14-16) pour empêcher que le dispositif quitte de façon non prévu ledit bâti, ainsi que des organes pour détecter les marchandises, les mouvements des organes de levage et de support pouvant être commandés par une horloge programmatrice ou analogue (28), et l'un (15) des organes cités (14-16) consistant en un organe détecteur, de préférence une cellule photoélectrique, pour détecter lesdits moyens de support, ledit organe étant prévu, lors de l'arrêt du contact de détection, pour fournir une impulsion à ladite horloge programmatrice ou analogue (28), laquelle arrête ensuite le dispositif, pour lui permettre de soulever ou de charger ou décharger des marchandises (46, 47), caractérisés en ce que les axes traversants (30, 31) sont fractionnés et de longueur variable et en ce que les roues porteuses (32) et/ou les moyens de support (55 respectivement 61) coopérant avec celles-ci sont pourvus d'organes (48, 51) respectivement (56, 57) pour faciliter l'introduction et la sortie des roues porteuses.

2. Dispositif et bâti selon la revendication 1, caractérisés en ce que les roues porteuses (32) sont portées par des axes (30, 31) en plusieurs parties et entraînés, les parties externes (30'', 30''') et (31'', 31''') des axes étant mobiles de façon limitée en direction axiale et possédant des moyens (40) qui tendent à mouvoir les roues (32) dans leur position la plus externe, en ce que les parties des axes sont reliées entre elles de façon solidaire en rotation, et en ce que les axes sont entraînés de préférence par une source d'entraînement commune (35), an particulier par un moteur électrique.

3. Dispositif et bâti selon la revendication 1, caractérisés en ce que l'un des organes cités (14-16) est un organe de signalisation (14) disposé sur le côté frontal du dispositif, à savoir un transmetteur mécanique, qui détecte des objets se trouvant devant le dispositif (1), par exemple des palettes de chargement (46), et qui est prévu, lors du contact de détection, pour délivrer un signal à ladite horloge programmatrice, et en ce que cet organe de signalisation (14) peut être de préférence mis hors fonction lorsque le dispositif (1) est prévu pour se positionner sous une palette de chargement (46), par exemple pour le transport de celle-ci.

4. Dispositif et bâti selon au moins l'une des revendications 1 à 3, caractérisés en ce que l'un des organes cités (14-16) est un organe de signalisation (16) disposé sur l'autre côté frontal du dispositif, à savoir un organe de basculement mécanique chargé par un ressort, qui est disposé sur la partie supérieure (4) du dispositif en liaison directe avec ledit côté frontal (8), lequel organe de signalisation est prévu, lors du positionnement du dispositif par exemple sous une palette de chargement (46), pour basculer et pour délivrer alors un signal qui est prévu de préférence pour arrêter le dispositif et pour sortir les organes de levage et de support (17, 18) dans leur position soulevée et pour soulever alors ladite palette de chargement (46).

5. Dispositif et bâti selon au moins l'une des revendications 1 à 4, caractérisés en ce que le dispositif possède un moyen de fixation, en particulier une garniture à friction et/ou une traverse (10, 11) pour fixer le dispositif en particulier sur les fourches d'un chariot gerbeur.

6. Dispositif et bâti selon au moins l'une des revendications 1 à 5, caractérisés en ce que les organes de levage et de support (17, 18) sont des poutres dont les extrémités sont portées chacune par un dispositif de levage entraîné, de préférence par des vérins hydrauliques (21-24), qui sont entraînés par l'intermédiaire de conduites hydrauliques (25) par un ensemble hydraulique (26) avec un moteur électrique (27).

7. Dispositif et bâti selon au moins l'une des revendications 1 à 6, dans lesquels lesdits moyens de support sont les rails (61) d'un bâti d'empilement profond (2), lesquels rails sont prévus pour porter par leur partie supérieure en particulier des palettes de chargement (46) avec des marchandises (47), caractérisés en ce que les rails (61) respectivement les profils de support (49) adjacents présentent au moins à un endroit des évidements (48) ouverts vers le haut, par lesquels les roues porteuses (32) peuvent être amenées en position et retirées.

8. Dispositif et bâti selon la revendication 7, caractérisés en ce que les évidements (48) sont limités par des tôles de glissement (51) qui s'étendent depuis une zone supérieure à l'extérieur des rails porteurs (61) en biais vers le bas en direction de l'intérieur des rails porteurs et qui de préférence sont limitées par des tôles transversales (52).

9. Dispositif et bâti selon au moins l'une des revendications 1 à 8, caractérisés par un bâti (3) pour porter le dispositif (1) à l'extérieur d'un bâti d'empilement profond (2) avec des moyens de support (55) pour les roues porteuses (32) du dispositif, lesdits moyens de support (55) présentant des tôles de guidage (56) supérieures et externes inclinées vers le bas et vers l'intérieur, lesquelles conduisent à des tôles de centrage (57) inférieures, sensiblement horizontales et en forme de V, sur lesquelles aboutissent les roues porteuses lors du rangement du dispositif en une position finale de guidage forcé de l'ensemble du dispositif, dans laquelle le dispositif est amené automatiquement en contact électrique avec des contacts de charge (58) pour charger les batteries (29) du dispositif.

10. Dispositif et bâti selon au moins l'une des revendications 1 à 9, caractérisés en ce que les roues porteuses font saillie au niveau de leur côté frontal externe, en particulier sont convexes.

# FIG.1

31  32  7  20  30  32  17

4

16

8

15  31

32  18  1  6  19  32

# FIG. 2

7  32  30,31

12,13

5

10,11

30,31  32

17

8

4

16

1

15

18

6

FIG. 3

FIG.4

FIG. 5

FIG.6

FIG.7

FIG.8

FIG.9

FIG. 10

0 197 448

FIG. 11

FIG. 12

61

49

61

49

FIG. 14

49

61

FIG. 13

49

61